# EUROPEAN PATENT APPLICATION

(11) **EP 4 810 291 A1**
(43) Date of publication of application: **23.09.2026**
(21) Application number: 26164984.2
(22) Date of filing: 16.03.2026
(51) Int. Cl.: B60K 11/08

(54) **OFF-FLOW COOLING METHOD AND UNIT**

(30) Priority: 19.03.2025 IT 202500005607
(71) Applicant: FERRARI S.p.A., 41100 Modena (IT)
(72) Inventor: FULLIN, Francesco, 41100 Modena (IT)
(74) Representative: Studio Torta S.p.A.

(57) **Abstract**

A cooling method and unit (4) of a vehicle (1) for cooling a radiant mass (5); wherein, the cooling unit (4) comprises an inlet port (6), an outlet port (7), a conduit (8) which fluidically connects the inlet port (6) with the outlet port (7), a pneumo-system (9) installed along said conduit (8) and a radiant system (12) installed along said conduit (8); the method comprising the steps of: conveying a flow of air (A) through said inlet port (6) within the conduit (8); cooling the carrier fluid (f) which traverses the radiant system (12) by means of said flow of air (A) and generating a thrust force (Fs) by means of the flow of air (A) exiting from the outlet port (7).

## Description

### CROSS-REFERENCE TO RELATED APPLICATIONS

This patent application claims priority from Italian patent application no. 102025000005607 filed on March 19, 2025, the entire disclosure of which is incorporated herein by reference.

### FIELD OF THE ART

The invention concerns a method and an off-flow cooling unit for a motor vehicle.

### PRIOR ART

It is well known that a motor vehicle comprises a cooling unit with a radiant mass positioned in the front area, in order to take advantage of the flow of air due to the motion of the vehicle itself, for cooling the coolant. Radiant masses of the known type need to be subjected to a high flow of air, particularly in sports cars. In particular, in a sports car, the radiant mass can take up a large part of the front area. More specifically, the air intake used to direct the flow of air over the radiant mass can take up a large part of the vehicle's nose.

A conventional cooling unit has the disadvantage that it exerts high aerodynamic resistance due to the size of the radiant mass. Furthermore, the operation of a conventional cooling unit depends on the speed of the vehicle.

### DISCLOSURE OF THE INVENTION

The purpose of the present invention is to provide a cooling unit that overcomes the drawbacks described above.

According to the present invention, a cooling unit and a motor vehicle are provided as mentioned in the appended claims.

The dependent claims define particular embodiments of the invention.

### BRIEF DESCRIPTION OF THE DRAWINGS

In the following, embodiments of the invention are described for a better understanding thereof by way of nonlimiting examples and with reference to the accompanying drawings, in which:
- Figure 1 is a schematic view, with some parts removed for clarity, of a motor vehicle according to the present invention;
- Figure 2 is a schematic view, with some parts removed for clarity, of a cooling unit according to the present invention;
- Figure 3 is similar to Figure 2 and illustrates a variant of a cooling unit according to the present invention;
- Figure 4 is a schematic view of a detail of Figure 2 or 3;
- Figure 5 is a schematic view of a detail of Figure 4;
- Figure 6 shows an alternative embodiment to the cooling unit shown in Figure 2;
- Figure 7 shows an alternative embodiment to the cooling unit shown in Figure 3.

### EMBODIMENTS OF THE INVENTION

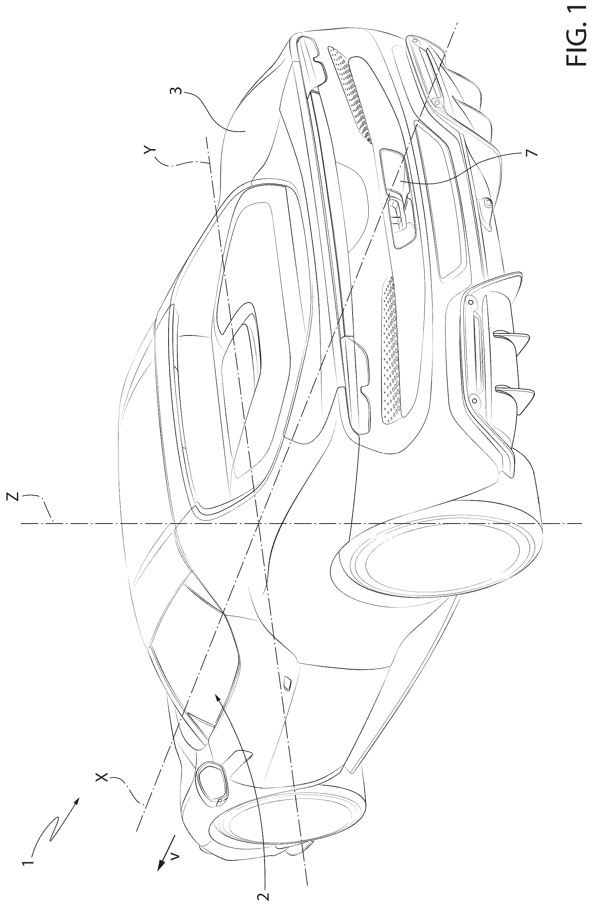

In Figure 1, the reference number 1 is used to indicate, as a whole, a motor vehicle comprising, in a known manner: a load-bearing structure (e.g. a body and/or chassis), which defines a passenger compartment 2 configured to accommodate at least one driver and, possibly, one or more passengers; and a bodywork 3, which externally covers the load-bearing structure.

As is well known, the motor vehicle 1 has: a longitudinal axis X, generally called the roll axis; a transverse axis Y, generally called the pitch axis; and a vertical axis Z, generally called the yaw axis.

The motor vehicle 1 is roto-translating, in a known manner, on a horizontal support plane π. The terms "front", "rear", "right", "left", "top", "bottom", "upstream", "downstream" and the like are used with reference to the motor vehicle 1 moving forward v. The terms "external", "internal" and the like are used with reference to the passenger compartment in which the driver of motor vehicle 1 is seated while driving. The term "depth" refers to the extension along the longitudinal axis X; the term "width" refers to the extension along the transverse axis Y; the term "height" refers to the extension along the vertical axis Z.

The motor vehicle 1 comprises a cooling unit 4 which is configured to cool a radiant mass 5 regardless of the speed of the motor vehicle 1, as will be further explained below.

According to the present invention, the cooling unit 4 comprises one or more inlet ports 6, one or more outlet ports 7 and a conduit 8, which fluidically connects each inlet port 6 with a respective outlet port 7. The number and mutual arrangement of the inlet ports 6 and outlet ports 7 are variable. There may be different numbers of inlet ports 6 and outlet ports 7. The cooling unit 4 comprises a pneumo-system 9, which is installed along said conduit 8. The pneumo-system 9 can be, for example, a suction machine or booster fan or a compressor. The pneumo-system 9 is configured to regulate the flow of air A along the conduit 8, as will be explained in more detail below.

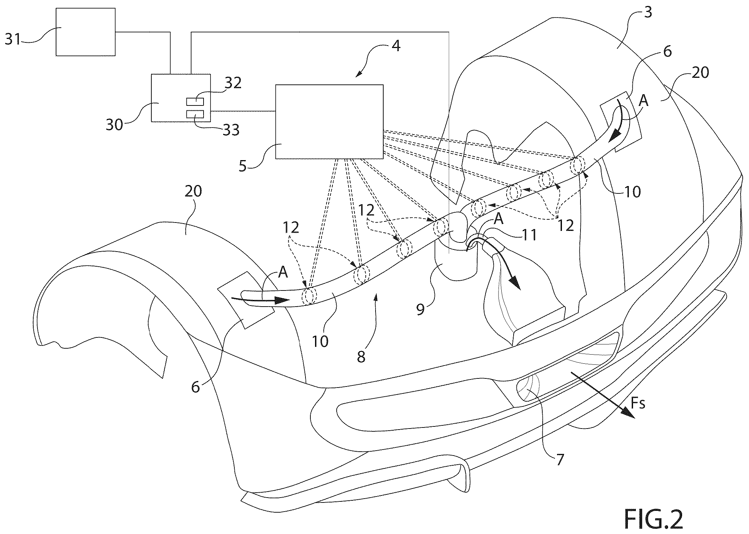

According to the example shown in Figure 2, the cooling unit 4 comprises two inlet ports 6 and one outlet port 7. The conduit 8 comprises, for each inlet port 6, a respective inlet duct 10 that connects the inlet port 6 with the pneumo-system 9. In other words, the cooling unit 4 comprises two inlet ducts 10, hereafter identified as right and left ducts (one for each inlet port 6). According to the illustrated example, the conduit 8 further comprises an outlet duct 11 that connects the pneumo-system 9 with the outlet port 7.

According to a variant not illustrated, the cooling unit 4 may comprise a plurality of pneumo-systems; in this case, the pneumo-systems are installed along the conduit 8 so as to work in series or in parallel with each other.

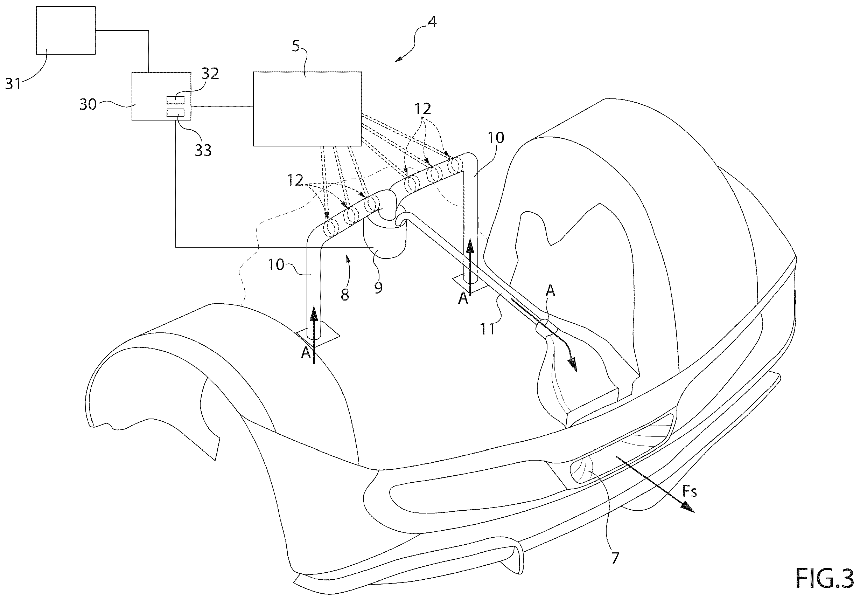

According to the embodiment illustrated in Figures 2 and 3, the cooling unit 4 further comprises one or more radiant systems 12, each of which is installed along said conduit 8. The number and distribution of radiant systems 12 are variable. According to the illustrated example, the radiant systems 12 are installed along the inlet ducts 10, as will be explained in more detail below.

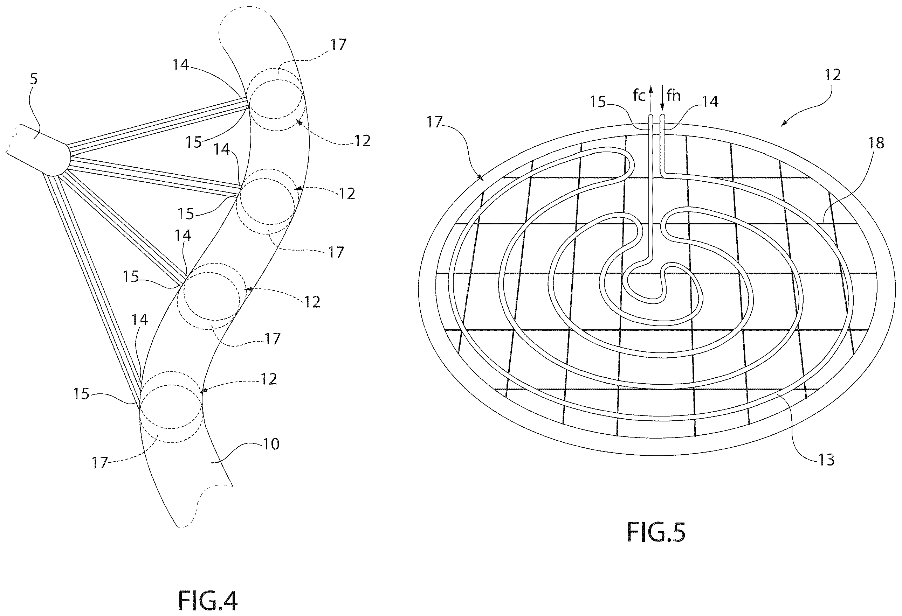

As illustrated in more detail in Figures 2, 3 and 4, each radiant system 12 is configured to be installed within a respective portion of duct. For example, the radiant system 12 may be cylindrical in shape and have dimensions such that it can be fitted inside a respective duct. By way of example only, the radiant system 12 can have a diameter comprised between 80 and 100 mm. According to the example shown in Figure 5, the radiant system 12 comprises a coil 13 configured to be traversed by a carrier fluid f and having an inlet 14 and an outlet 15. According to the example illustrated, the coil 13 comprises a tube that is bent in a spiral, so that it occupies a large part of the passage section of the respective duct. According to the illustrated example, preferably, the inlet 14 and outlet 15 of the coil 13 are side-by-side.

The radiant system 12 comprises a fastening system 17 which is configured to fasten the coil 13 inside the duct 10. According to the illustrated example, the fastening system 17 comprises a grating 18 formed by a metal mesh, which occupies the section of the duct. The coil 13 is fastened, in turn, onto the grating 18. The shape and size of the coil 13 and the fastening system 17 are variable.

Each radiant system 12 is connected to the radiant mass 5, in order to allow the exchange of the carrier fluid f.

According to the illustrated example, advantageously, the outlet port 7 and/or the outlet duct 11 are shaped in such a way that an aerodynamic thrust force Fs is generated by the flow of air A at the outlet port 7 from the pneumo-system 9.

According to the example shown in Figure 2, each inlet port 6 is installed at a respective wheel arch 20. Each inlet port 6 is configured to suck in a flow of air A at overpressure in the vicinity of the wheel arch 20. Preferably, the pneumo-system 9 is configured to work in thrust; in other words, according to the example illustrated in Figure 2, the pneumo-system 9 is a blower or compressor.

Advantageously, the cooling unit 4 comprises a control unit 30, which is connected and configured to exchange signals with a control module 31 of the vehicle 1 and with the pneumo-system 9. The control module 31 is configured to exchange with the control unit 30 signals relating to the instantaneous operating conditions of the vehicle 1 such as: the forward speed of the vehicle 1 and the temperature of the radiant mass 5.

The control unit 30 is configured to regulate the pneumo-system 9 according to: the instantaneous forward speed of the vehicle 1; and/or the instantaneous condition of the radiant mass 5.

In particular, the control unit 30 comprises, in turn, a memory unit 32, and a calculation unit 33.

The memory unit 32 is configured to contain association data between the response parameters r of the pneumo-system 9 and the operating parameters w.

For example, a plurality of tables relating the response parameters r to the operating parameters w are loaded into the memory unit 32.

The response parameters r comprise the drive parameters of the pneumo-system 9. For example, the operating parameters r comprise the rotation speed of the pneumo-system 9.

The operating parameters w comprise: the instantaneous speed of the vehicle 1; the temperature of the radiant mass 5.

The calculation unit 30 is configured to select suitable association data, depending on the operating parameters w detected.
According to the embodiment illustrated in Figures 2 and 3, the radiant mass 5 is a radiator of the traditional type and arranged in a front position of the vehicle 1. In other words, according to the embodiment shown in Figures 2 and 3, the radiant mass 5 is a component in a remote position with respect to the outlet duct 11.

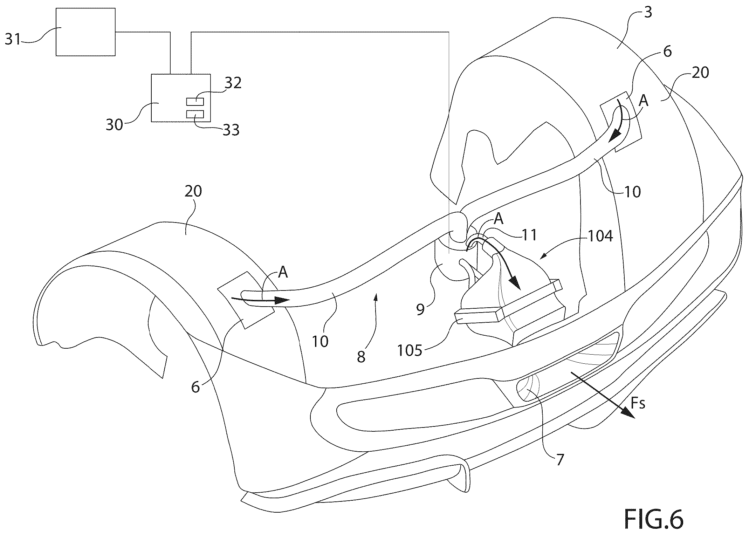

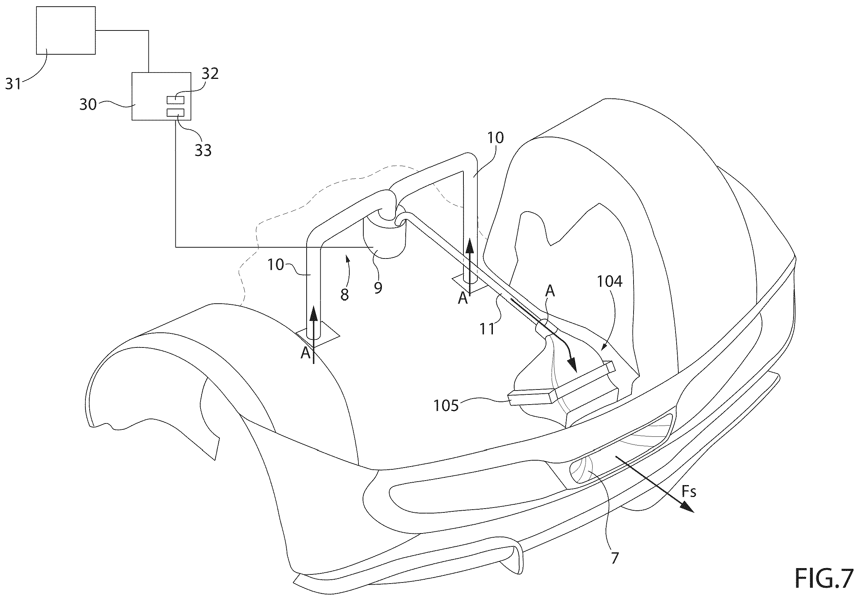

In Figures 6 and 7 the number 104 indicates a different embodiment of a cooling unit according to the present invention. In Figures 6 and 7, the components in common with the solutions illustrated in Figures 2 and 3, respectively, retain the same numbering and are considered therein without repeating them for the sake of brevity.
Unlike the solutions described above, the cooling unit 104 comprises a radiant mass 105 which is installed along the outlet duct 11. The cooling unit 104 is devoid of the radiant systems along the inlet ducts 10. In this case, advantageously, the radiant mass 105 is housed in a rear position of the vehicle 1, providing greater design freedom for the front part of the vehicle 1 itself.

When using a cooling unit 4 of the type described above, each inlet port 6 allows a respective flow of air A to enter a respective inlet duct 10. According to the example illustrated in Figure 2, the vehicle 1 comprises a plurality of inlet ports 6, which are installed at the respective wheel arches 20 where overpressure air is generally present during the travel of the vehicle 1. In other words, generally, at a wheel arch 20, due to the overall aerodynamics of the vehicle 1, there is an excess of overpressure with an upward vertical component, which has a negative effect on the stability of the vehicle 1. As illustrated in Figure 2, the overpressure air is conveyed with the flow of air A into the inlet ducts 10, through the inlet ports 6, towards the pneumo-system 9. Preferably, the pneumo-system 9 is a blower, which increases the kinetic energy of the air exiting the outlet port 7. Preferably, the outlet port 7 is configured to generate a thrust force Fs via the flow of air A at the outlet.

Advantageously, the control unit 30 instantaneously detects the speed of the vehicle 1 and the temperature of the radiant mass 5 from the control module 31. Depending on the signals detected by the control module 31, the control unit regulates the operation of the pneumo-system 9 so as to achieve a determined flow rate of the flow of air A through the conduit 8.

Advantageously, during the crossing of the conduit 8, the flow of air A is used to cool the carrier fluid f, which passes through each radiant system 12. Specifically, for each radiant system 12 hot carrier fluid fh enters and cold carrier fluid fc exits. Preferably, the carrier fluid f is exchanged with the radiant mass 5 and, in particular, the radiant mass 5 sends hot carrier fluid fh to, and receives cold carrier fluid fc from, each radiant system 12. Thus, advantageously, each radiant system 12 contributes to cooling the carrier fluid f circulating in the radiant mass 5. This makes it possible to distribute at least part of the radiant surface of the radiant mass 5 in a plurality of radiant systems 12 installed within the conduit 8. This makes it possible to reduce the overall dimensions of the single radiant mass 5 and, therefore, the dimensions of the cooling unit 4 at the nose of the vehicle 1.

According to the variant illustrated in Figure 3, the inlet ports 6 are installed in such a way as to suck a flow of air A from the bottom of the vehicle 1. In this case, preferably, the pneumo-system 9 is a suction machine and is configured in such a way as to allow the suction of a flow of air A from the bottom of the vehicle 1.

In use, according to the variant shown in Figure 3, the flow of air A sucked in from the bottom of the vehicle 1 is conveyed into the inlet ducts 10 and pushed out through the outlet port 7. Advantageously, the fact that a flow of air A is sucked in from the bottom of the vehicle 1 makes it possible to increase the suction effect and increase the stability of the vehicle 1 itself.

The use of the embodiments of the cooling unit 104 is similar to that described above for the cooling unit 4. In contrast to the above, the radiant mass 5 is installed along the outlet duct 11 and is cooled by the flow of air A exiting the outlet duct 11. Advantageously, the arrangement of the radiant mass 5 along the outlet duct 11 heats the flow of air A by increasing the achievable thrust force Fs.

It follows from the above that a cooling unit 4, 104 according to the present invention improves aerodynamic performance having reduced the radiant mass exposed to the natural flow. A further aerodynamic advantage is to have introduced suction from an overpressure zone (wheel well, for example) and to have introduced blow-off in a low-pressure zone (e.g. the rear wake, commonly referred to as the "base region").

In addition, the assembly of radiant systems 12 according to the present invention is small in size and easily installed in any position of the motor vehicle 1. In other words, the cooling unit 4 according to the present invention is particularly versatile in that it can be adapted to any type of architecture of a motor vehicle 1.

Advantageously, the cooling unit 4, 104 according to the present invention exerts less aerodynamic drag than a conventional cooling unit due to the reduced size of the radiant mass 5 and/or the housing of the radiant mass 5 in the rear of the motor vehicle 1.

Advantageously, the operation of a cooling unit 4, 104 according to the present invention is independent of the speed of the motor vehicle 1. In fact, the pneumo-system 9 can be regulated to obtain a certain flow rate of the flow of air A through the conduit 8, depending on the instantaneous speed of the vehicle 1.

## Claims

1. A cooling method of a radiant mass (5) of a cooling unit (4; 104) of a vehicle (1); wherein, the cooling unit (4; 104) comprises an inlet port (6), an outlet port (7), a conduit (8) which fluidically connects the inlet port (6) with the outlet port (7), a pneumo-system (9) installed along said conduit (8) and a radiant unit (5; 12) installed along said conduit (8) traversed, in use, a carrier fluid (f); the method comprising the steps of:
- conveying a flow of air (A) through said inlet port (6) within an inlet duct (10) of said conduit (8);
- cooling the carrier fluid (f) which traverses the radiant unit (5; 12) by means of said flow of air (A) ;
- conveying the flow of air (A) in an outlet duct (11) of said conduit (8) by means of said pneumo-system (9);
- generating a thrust force (Fs) by means of the flow of air (A) exiting from the outlet port (7).

2. A cooling method according to claim 1 wherein the method comprises to increase the pressure of said flow of air (A) by means of the pneumo-system (9); wherein said pneumo-system (9) is regulated in function of the forward speed of the vehicle (1).

3. A cooling method according to claim 1 or 2, wherein the cooling unit (4) comprises a plurality of inlets (6), a plurality of inlet conduits (10); wherein said radiant unit (12) comprises a plurality of radiant systems (12), each of which is installed along a respective inlet duct (10); wherein each radiant system (12) is fluidically connected with the radiant mass (5) so as to permit the circulation of the carrier fluid (f); wherein, the step of conveying comprises conveying simultaneously, by means of said plurality of inlets (6), respective flows of air (A) toward said pneumo-system (9).

4. A cooling method according to any preceding claim, wherein one or more inlets (6) are disposed to convey inside said conduit (8) an overpressure flow of air (A); the method comprising the step of sucking a flow of air (A) by means of said inlets (6).

5. A cooling method according to claim 4 wherein the step of sucking comprises sucking an overpressure flow of air (A) in correspondence of the wheel arches (20) of the vehicle (1).

6. A cooling method according to any preceding claim, wherein one or more inlets (6) are disposed so as to generate a depression in correspondence of a respective outer zone of the vehicle (1); wherein, the step of sucking comprises to suck a flow of air (A) so as to increase the depression in correspondence of the vehicle (1) bottom.

7. A cooling method according to any preceding claim, wherein the radiant unit (5) is said radiant mass; wherein the radiant unit (5) is installed along said outlet duct (11); wherein, the step of generating a thrust force (Fs) comprises to heat the flow of air (A) by means of the radiant unit (5).

8. A cooling unit for a vehicle (1) comprises an inlet port (6), an outlet port (7), a conduit (8) which fluidically connects the inlet port (6) with the outlet port (7), a pneumo-system (9) installed along said conduit (8) and a radiant unit (5; 12) traversed, in use, by a carrier fluid (f).

9. A cooling unit according to claim 8, wherein the outlet port (7) is configured to generate a thrust force (Fs) by means of said flow of air (A).

10. A cooling unit according to claim 8 or 9 and comprising a plurality of inlet ports (6); wherein, said conduit (8) comprises a plurality of inlet ducts (10), each of which connects said inlet port (6) with the pneumo-system (9); wherein the radiant unit (12) comprises a plurality of radiant systems (12), each of which is installed along a respective inlet duct (10); wherein each radiant system (12) is fluidically connected with the radiant mass (5) so as to permit the circulation of the carrier fluid (f).

11. A cooling unit according to claim 8 or 9, wherein the radiant unit (5) is said radiant mass; wherein the radiant unit (5) is installed along said outlet duct (11) so as to heat, in use, the flow of air (A).

12. A vehicle comprising a cooling unit (4) according to any claim from 8 to 11.
